# EUROPEAN PATENT APPLICATION

(11) **EP 4 810 372 A1**
(43) Date of publication of application: **23.09.2026**
(21) Application number: 25176861.0
(22) Date of filing: 16.05.2025
(51) Int. Cl.: B64D 13/00

(54) **UNPRESSURISED BAY COMPARTMENT IN AN AIRCRAFT HAVING A VENTILATION SYSTEM**

(30) Priority: 21.03.2025 IN 202511025985
(71) Applicant: AIRBUS Operations GmbH, 21129 Hamburg (DE)
(72) Inventor: Komarla, Sasank, Bangalore (IN)
(74) Representative: Schornack, Oliver

(57) **Abstract**

The present disclosure relates to an unpressurised bay compartment (10) in an aircraft, comprising a ventilation system (100). The ventilation system includes a single air inlet (110) in an outer skin (2) of the aircraft, two ducts (131, 132), a conveying device (50) arranged in the first duct (131), a duct furcation (134), where the first duct and the second duct (132) branch off from one another upstream of the conveying device (50), a duct junction (135), where the first duct (131) and the second duct (132) join one another downstream of the conveying device, and a valve (150) arranged in the first duct (131) between the duct furcation (134) and the conveying device (50).

## Description

The present disclosure generally relates to an unpressurised bay compartment in an aircraft comprising a ventilation system, and an aircraft. Particularly, the present disclosure relates to an unpressurised bay compartment in an aircraft comprising a ventilation system including a single air inlet in an outer skin of the aircraft. The ventilation system has at least two ducts, wherein one duct bypasses a conveying device in the other duct. The present disclosure further relates to an aircraft comprising at least one such unpressurised bay compartment

A conventional bay compartment in an aircraft, such as a pack bay (housing an air conditioning system) of the aircraft or a main landing gear bay (housing an uplifted landing gear), is usually ventilated by a plurality of ducting receiving air from a ram air inlet and from a ground inlet. Attached to the ground inlet is usually a duct including a turbofan driven by bleed air, in order to blow air from the ground inlet into the bay compartment. The ram air inlet collects air during flight of the aircraft and guides the collected air into the bay compartment through the plurality of ducting.

Nevertheless, such ventilation of regions of an aircraft may still be improved.

It is therefore an object of the present disclosure to provide an improved unpressurised bay compartment that can be ventilated in an easy and lightweight manner.

This object is solved by the present invention as defined in the independent claims. Preferred embodiments are derivable from the dependent claims.

According to a first aspect to better understand the present disclosure, an unpressurised bay compartment in an aircraft comprises a portion of an outer skin of the aircraft, and a ventilation system. The ventilation system includes a single air inlet in the outer skin, a first duct, a conveying device arranged in the first duct and configured to convey air from the single air inlet through the first duct, a second duct arranged to bypass at least the conveying device, and a duct furcation, where the first duct and the second duct branch off from one another, wherein the duct furcation is disposed between the single air inlet and the conveying device. Thus, the first and second duct are fluidly arranged parallel to one another. Air that does not or cannot flow through the first duct can flow through the second duct and vice versa.

Furthermore, the ventilation system includes a duct junction, where the first duct and the second duct join one another, and a valve arranged in the first duct between the duct furcation and the conveying device. The duct junction is disposed downstream of the conveying device.

Therefore, the unpressurised bay compartment can be ventilated by the ventilation system employing only a single air inlet in the outer skin. This saves weight compared to the conventional solution comprising at least two air inlets. Furthermore, less drag is created at the outer surface of the outer skin, which reduces fuel consumption of the aircraft.

The duct furcation and duct junction provide for a fluidly parallel arrangement of the first and second duct, which further allows providing a stream of air from the single inlet to the duct junction either through the first duct or the second duct. While the first duct includes the conveying device, which allows conveying air, i.e., generating a stream of air to the duct junction, the second duct may function as air ducting, when air enters the single air inlet independently, for example, as ram air during a flight. By closing the valve, the first duct may not receive an air stream entering the single air inlet. By opening the valve, the air stream can enter the first duct. In other words, when the conveying device is operated, the air stream is actually sucked through the single air inlet and into the first duct passing the valve, while during a flight, when the conveying device is not operated, the air stream is pushed into the single air inlet due to the flight speed of the aircraft and such ram air is further pushed through the second duct, particularly when the valve is closed.

Therefore, the present disclosure provides for a simple ventilation system that is easy to install, as the number of components is lower compared to a conventional ventilation system. The ventilation system, hence, is also lighter than conventional ventilation systems comprising a plurality of inlets.

In an implementation variant, the first duct can have a straight section extending from the single air inlet at least up to the conveying device. Such straight section facilitates a uniform air flow from the single air inlet to the conveying device. Thus, the conveying device receives an air stream with less or no flow instabilities, which avoids or at least significantly reduces inlet distortions at the conveying device.

In an implementation variant, the second duct can have a straight section extending from the single air inlet at least up to the duct junction. This allows reusing existing components, for example, usually employed with a conventional ram air inlet, such as ducting, holders and the like, or installing the ventilation system in an area of the unpressurised bay compartment providing the best installation space.

In an implementation variant, the single air inlet can be an air intake having a variable air intake capacity. As a mere example, the air intake may include an intake valve at an entry level of the air intake or the like that can change an open cross-section of the air inlet, thereby controlling the amount (capacity) of air intake.

In an implementation variant, the air intake can comprise an actuator actively controlling the air intake cross-sectional area, for example, via a valve or the like, and changing the amount (capacity) of air that can be received through the air inlet. As a mere example, a valve or similar movable element, which can be operated by the actuator, can be employed.

In an implementation variant, the ventilation system can further comprise a third duct arranged downstream of the duct junction, and a distribution ducting having a plurality of air outlets, the plurality of air outlets being distributed throughout a portion of the unpressurised bay compartment. The third duct can guide an air flow downstream of the duct junction received either through the first duct or the second duct. In other words, the third duct is a single duct after the first and second duct are joined at the duct junction.

The distribution ducting and plurality of outlets may be arranged in the unpressurised bay compartment in a preset layout. For instance, the plurality of outlets may be disposed in a manner providing a uniform ventilation throughout the unpressurised bay compartment.

In an implementation variant, the ventilation system can further comprise a control unit configured to control the conveying device and the valve. As a mere example, the control unit can be configured to open the valve and start operating the conveying device. Furthermore, the control unit may be configured to control and adjust an amount of air (mass flow) streaming through the first duct and sucked into the ventilation system through the single air inlet by controlling the conveying device and/or the valve.

In an implementation variant, the control unit can be configured to switch on the conveying device and to open the valve, when the aircraft is in a ground mode, where the aircraft is on the ground, or in a slow flight mode, where the aircraft flies at a speed below a threshold value. Furthermore, the control unit can be configured to switch off the conveying device and to close the valve, when the aircraft is in a flight mode, where the aircraft moves through air (e.g., the aircraft flies faster than the threshold speed). Thus, the single air inlet can be operated as an air intake for the airstream generated by the conveying device and as a ram air inlet in ground mode and flight mode, respectively.

In an implementation variant, the unpressurised bay compartment can further comprise a bleed air supply connected to the conveying device. The conveying device, for example, can be a turbofan. In other words, the conveying device is or includes a turbofan propelled by bleed air. The turbofan includes a turbine propelled by the bleed air and a fan or compressor generating the air stream and driven by the turbine. For instance, the turbine and the fan or compressor may be provided on a common shaft.

In an implementation variant, the unpressurised bay compartment can further comprise a bleed air control valve configured to provide a controllable amount of bleed air from the bleed air supply to the turbofan. Thus, the speed of the turbofan can be controlled by controlling the amount of bleed air supplied to the turbofan, which controls the amount of air (e.g., a mass flow) conveyed by the conveying device.

As a mere example, the control unit may further be configured to control the bleed air control valve, for example, controlling, setting or adjusting an opening degree of the bleed air control valve or closing the bleed air control valve.

In an implementation variant, the unpressurised bay compartment can be a pack bay configured to house at least one air-conditioning system of the aircraft. The pack bay is an area in the aircraft, for example, at the belly faring housing an air-conditioning system of the aircraft, for example, to provide fresh air to and to pressurise a cabin and/or cargo compartment of the aircraft. Thus, the unpressurised bay compartment is provided with fresh air, for example, in order to remove fuel fumes thereby providing fire protection in the bay compartment. The unpressurised bay compartment is not pressurised compared to the cabin or cargo compartment, i.e., the pressure in the unpressurised bay compartment corresponds or depends on the pressure outside of the aircraft.

According to a second aspect to better understand the present disclosure, an aircraft comprises at least one unpressurised bay compartment of the first aspect or one or more of its variants.

As a mere example, the aircraft can comprise two unpressurised bay compartments adjacent to one another on the left-hand side and the right-hand side of the aircraft (when viewing in the longitudinal direction of the aircraft). Each of such unpressurised bay compartments can house a respective air-conditioning unit of the aircraft. The two unpressurised bay compartments may be fluidly separated from one another or may be arranged next to each other without fluid separation. Thus, a redundant ventilation of the bay compartments can be achieved.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an aircraft;
- Figure 2: schematically illustrates a conventional ventilation system;
- Figure 3: schematically illustrates an unpressurised bay compartment having a first exemplary ventilation system;
- Figure 4: schematically illustrates an unpressurised bay compartment having a second exemplary ventilation system;
- Figure 5: schematically illustrates controllable streams of air through the ventilation system of Figure 3;
- Figure 6: schematically illustrates a conventional ducting of a conventional ventilation system; and
- Figure 7: schematically illustrates an exemplary ducting of a ventilation system of the present disclosure.

In the following description, for purposes of explanation and not limitation, specific details are set forth in order to provide a thorough understanding of the present disclosure. It will be apparent to one skilled in the art that the present disclosure may be practiced in other implementations that depart from these specific details.

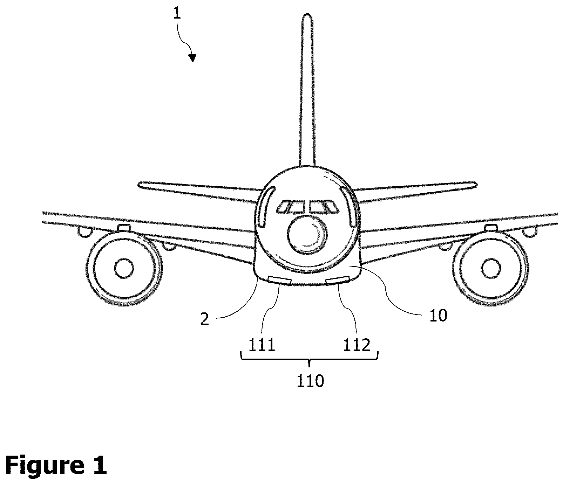

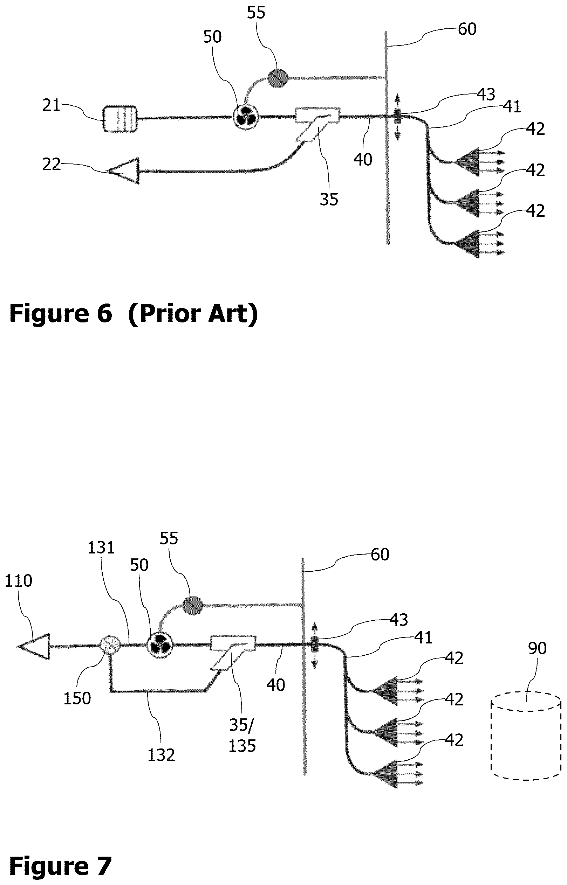

Figure 1 schematically illustrates an aircraft 1, particularly a partial front view of the aircraft 1. At the bottom of the aircraft 1 is usually a belly faring, where the wings of the aircraft 1 are attached to the fuselage, the main landing gear (not illustrated) is housed when lifted and where certain components of the aircraft are installed. For instance, an air-conditioning system 90 (Figure 7) or a portion thereof can be installed in this bottom region of the aircraft 1.

As will be explained in more detail below, this bottom region includes an unpressurised bay compartment 10. The unpressurised bay compartment 10, for example, is not pressurised, i.e., an air pressure inside of the unpressurised bay compartment 10 corresponds or strongly depends on the pressure outside of the aircraft 1.

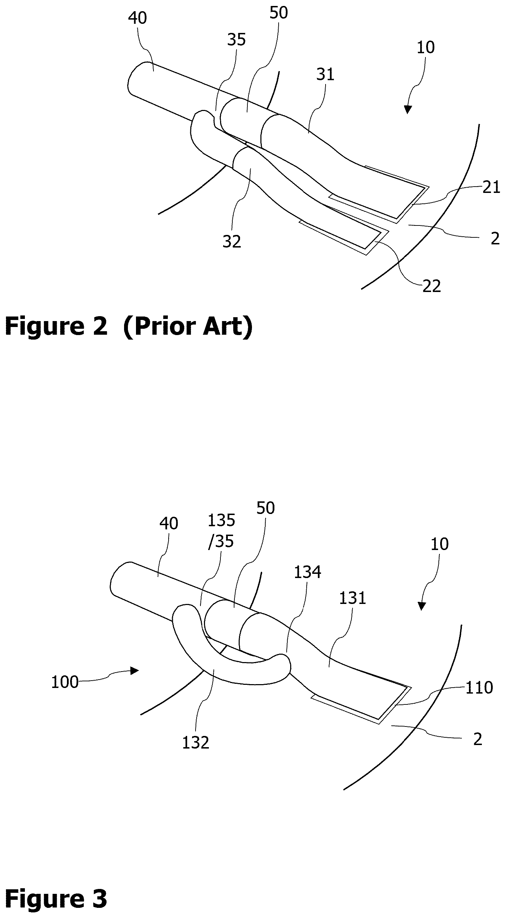

The unpressurised bay compartment 10 can be ventilated by a ventilation system 100 (Figure 3). For example, the aircraft 1 can comprise two unpressurised bay compartments 10 arranged next to each other on the left-hand side and the right-hand side of the aircraft. Each of the unpressurised bay compartments 10 can house one or more components or systems of the aircraft 1. A respective air intake 111, 112 is provided (generally referred to as an air intake or single air inlet 110) in the outer skin 2 of the aircraft 1. The air intake 110 forms an opening in the aircraft skin 2, through which air can be introduced into the unpressurised bay compartment 10.

Figure 2 schematically illustrates a conventional ventilation system arranged in an unpressurised bay compartment 10. This conventional system comprises a ground air intake 21, to which a ground duct 31 is connected. A conveying device 50 is arranged in or connected to the ground duct 31, so that air can be conveyed by the conveying device 50 by sucking it through the ground air intake 21 and the ground duct 31 towards a further ventilation duct 40. This type of ventilation can be used, when the aircraft is on ground.

In case the aircraft flies, ram air can be used to ventilate the unpressurised bay compartment 10. The conventional ventilation system comprises a corresponding ram air inlet 22, to which the ram air duct 32 is connected. The ram air duct 32 merges into the ground duct 31 at a merging point 35. In other words, the ram air duct 32 merges into the ventilation duct 40 downstream of the conveying device 50. Thus, the ventilation duct 40 can be provided with a stream of air either through the ground duct 31 or the ram air duct 32.

Figure 3 schematically illustrates an unpressurised bay compartment 10 having a first exemplary ventilation system 100 according to the present disclosure. This ventilation system 100 includes a single air inlet 110 arranged in the outer skin 2, and a first duct 131, in which a conveying device 50 is arranged. The conveying device 50 is configured to convey air from the single air inlet 110 through the first duct 131 to a region of the unpressurised bay compartment 10 to be ventilated.

The ventilation system 100 further comprises a second duct 132 and a duct furcation 134, where the first duct 131 and the second duct 132 branch off from one another. The duct furcation 134 is disposed between the single air inlet 110 and the conveying device 50.

The ventilation system 100 further comprises a duct junction 135, where the first duct 131 and the second duct 132 join one another. The duct junction 135 is disposed downstream of the conveying device 50. Thus, the second duct 132 is arranged to bypass at least the conveying device 50. In other words, the second duct 132 runs fluidly parallel to the first duct 131 and the conveying device 50.

The single air inlet 110 can be a morphing air intake, such as a passive morphing air intake, that has a variable air intake capacity. Such single air intake 110, which is usable with the conveying device 50 as well as for ram air intake, reduces the openings 111, 112 in the outer skin 2 of the aircraft 1. This significantly reduces weight as well as drag, both reducing the fuel consumption of the aircraft 1.

In the exemplary ventilation system 100 of Figure 3 the first duct 131 has a straight section extending from the single air inlet 110 at least up to the conveying device 50. This allows a uniform air stream in the first duct 131, so that flow instabilities and/or inlet distortions at the conveying device can be avoided or at least significantly reduced. This increases the lifespan of the conveying device 50. Furthermore, some components of a conventional ventilation system may be reused, such as ground duct 31 as well as conveying device 50.

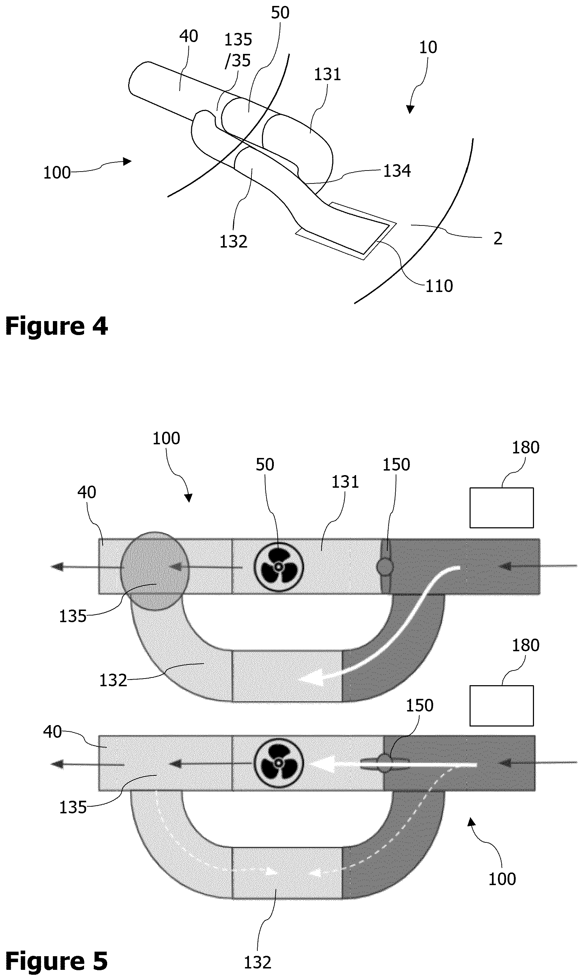

Figure 4 schematically illustrates an unpressurised bay compartment 10 having a second exemplary ventilation system 100 according to the present disclosure. Components of the same type and/or function as in the example of Figure 3 are provided with the same reference numerals. The description of such components is omitted for sake of brevity.

The difference between the two exemplary ventilation systems 100 of Figures 3 and 4 is that the second duct 132 in the example of Figure 4 has a straight section extending from the single air inlet 110 at least up to the duct junction 135 (or closely upstream to the duct junction 135 in order to form the duct junction 135). This allows reusing existing components, for example, usually employed with a conventional ram air inlet of a conventional ventilation system. As a mere example, ducting, holders and the like associated with the ram air inlet 22 may be reused.

In the example of Figure 4, the duct furcation 134 is formed differently compared to the example of Figure 3, since the first duct 131 can branch off the straight second duct 132. Likewise, in the example of Figure 3, at the duct furcation 134 the second duct 132 can branch off from the straight first duct 131.

On the other hand, the duct junction 135/35 can be similar or the same as in the conventional ventilation system. As a mere example, in both exemplary ventilation systems 100 of Figures 3 and 4 a third duct 40, the duct junction 135/35 and the conveying device 50 can be conventional components that may be reduced, while all other components of the ventilation system 100 upstream of the legacy components are different compared to the conventional ventilation system.

It is to be understood that the present disclosure is not restricted to the two examples of Figures 3 and 4. As a mere example, the duct furcation 134 and/or the duct junction 135 may be symmetric components, i.e. particularly being axially symmetric. Thus, the first and second ducts 131, 132 divide symmetrically from a duct beginning at the single air inlet 110, and likewise may join symmetrically downstream of the conveying device 50.

Figure 5 schematically illustrates controllable streams of air through the ventilation system 100 of Figure 3. It is to be understood that corresponding schematic air streams can be controlled in the ventilation system 100 of Figure 3. As this controlling/generating of air streams is quite similar, an explicit explanation with respect to the example of Figure 4 is omitted.

For example, the ventilation system 100 can further comprise a control unit 180 configured to control the conveying device 50 as well as a valve 150 arranged in the first duct 131 between the duct furcation 134 and the conveying device 50. As a mere example, the valve 150 can be a butterfly valve, which can achieve a closed position where it closes the cross-section of the first duct 131 (see upper schematic drawing of Figure 5) and an open position, where it stands parallel to the stream in the first duct 131 (see lower schematic drawing of Figure 5).

Thus, in case of the aircraft 1 being in a flight mode, where the aircraft moves through air (for example, at least above a threshold speed), the control unit 180 can be configured to switch off the conveying device 50 and to close the valve 150 (see upper schematic drawing of Figure 5). Thus, an air stream is generated solely by ram air entering the single air inlet 110. The closed valve 150 guides the ram air through the second duct 132, where it enters the third duct 40 at the duct junction 135.

Referring to the lower schematic drawing of Figure 5, in case of the aircraft 1 being in a ground mode, where the aircraft is on the ground (or flies at slow speed below the threshold speed), the control unit 180 can be configured to switch on the conveying device 50 and to open the valve 150. Thus, an air stream is generated by the conveying device 50 that is sucked into the single air inlet 110 and further sucked through the first duct 131. The stream is then guided into the third duct 40 through the duct junction 135. An air stream entering the second duct 132 may be neglected, as a compensating pressure will build up in the second duct 132 from the duct junction 135 (see dashed arrows in Figure 5).

Providing the valve 150 in the first duct 131 further allows protecting the conveying device 50 when the aircraft is in flight mode. Specifically, while the present disclosure is not restricted to the valve 150 being arranged in the first duct 131, but also includes an implementation, where the valve 150 is arranged in the second duct 132, having the valve 150 in the second duct 132 would allow ram air to stream through the switched-off conveying device 50. This may harm the conveying device 50, as it can be propelled by the ram air stream.

Furthermore, in case at least an axial-symmetric duct furcation 134 (not illustrated) is employed, the valve 150 can be installed/implemented at the duct furcation 134. As a mere example, the valve 150 can be implemented as a flap moving from the left to the right, thereby guiding the ram air stream into the second duct 132 or freeing the path from the conveying device 50 and the first duct 131 to the single air inlet 110. In other words, such flap may close either the first duct 131 or the second duct 132.

For the sake of completeness, a ventilation scheme of a conventional ventilation system and a ventilation system 100 of the present disclosure are now described with respect to Figures 6 and 7, respectively.

Specifically, Figure 6 schematically illustrates a conventional ducting of a conventional ventilation system, which will be described also with reference to Figure 2. The conventional ventilation system may receive air through the ground inlet 21 or the ram air inlet 22. Either of these air streams enters the ventilation duct 40 through the merging point 35. Downstream of the ventilation duct 40 are several branches 41 of a distribution ducting. A plurality of outlets 42, 43 can be provided with the distribution ducting 41, in order to achieve a ventilation of the unpressurised bay compartment 10.

Likewise, Figure 7 schematically illustrates an exemplary ducting of a ventilation system 100 of the present disclosure. Here, air is solely received through single air inlet 110 and either runs through the first duct 131 or the second duct 132 depending on an opening degree of the valve 150. The unpressurised bay compartment 10 may house an air-conditioning system 90 of the aircraft 1. Thus, the unpressurised bay compartment 10 may also be referred to as a pack bay configured to house the air-conditioning pack 90.

The ventilation system 100 can further comprise a distribution ducting 41 having a plurality of air outlets 42, 43. The plurality of air outlets 42, 43 can be distributed throughout the unpressurised bay compartment 10 or at least a portion thereof. Thus, in case of the air-conditioning system 90 being housed in the unpressurised bay compartment 10, the plurality of air outlets 42, 43 ensure that the air-conditioning system 90 is surrounded by fresh air.

Moreover, the unpressurised bay compartment 10 may include a bleed air supply 60. Such bleed air supply 60 may be connected to an engine of the aircraft (see Figure 1), an auxiliary power unit (APU) and/or a pneumatic system of the aircraft (both not illustrated). The unpressurised bay compartment 10 can further comprise a bleed air control valve 55 configured to provide a controllable amount of bleed air from the bleed air supply 60 to the conveying device 50.

As a mere example, the conveying device 50 may be implemented as a turbofan driven by the bleed air from the bleed air supply 60 and further driving a conveying fan or compressor of the conveying device 50 arranged in the first duct 131 conveying the air sucked through the single air inlet 110.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An unpressurised bay compartment (10) in an aircraft (1), comprising:
a portion of an outer skin (2) of the aircraft; and
a ventilation system (100) including:
a single air inlet (110) in the outer skin (2),
a first duct (131),
a conveying device (50) arranged in the first duct (131) and configured to convey air from the single air inlet (110) through the first duct (131),
a second duct (132) arranged to bypass at least the conveying device (50),
a duct furcation (134), where the first duct (131) and the second duct (132) branch off from one another, the duct furcation (134) being disposed between the single air inlet (110) and the conveying device (50),
a duct junction (135), where the first duct (131) and the second duct (132) join one another, the duct junction (135) being disposed downstream of the conveying device (50), and
a valve (150) arranged in the first duct (131) between the duct furcation (134) and the conveying device (50).

2. The unpressurised bay compartment (10) of claim 1, wherein the first duct (131) has a straight section extending from the single air inlet (110) at least up to the conveying device (50), or
wherein the second duct (132) has a straight section extending from the single air inlet (110) at least up to the duct junction (135),or
wherein each of the first duct (131) and the second duct (132) has a straight section between the duct furcation (134) and the duct junction (135), wherein the duct furcation (134) and/or the duct junction (135) are axially symmetric.

3. The unpressurised bay compartment (10) of claim 1 or 2, wherein the single air inlet (110) is an air intake having a variable air intake capacity.

4. The unpressurised bay compartment (10) of one of claims 1 to 3, wherein the ventilation system (100) further comprises:
a third duct (40) arranged downstream of the duct junction (135), and
a distribution ducting (41) having a plurality of air outlets (42, 43), the plurality of air outlets (42, 43) being distributed throughout at least a portion of the unpressurised bay compartment (10).

5. The unpressurised bay compartment (10) of one of claims 1 to 4, wherein the ventilation system (100) further comprises:
a control unit (180) configured to control the conveying device (50) and the valve (150),
wherein, preferably, the control unit (180) is configured to switch on the conveying device (50) and to open the valve (150), when the aircraft (1) is in a ground mode, where the aircraft stands on the ground, and is configured to switch off the conveying device (50) and to close the valve (150), when the aircraft (1) is in a flight mode, where the aircraft moves through air.

6. The unpressurised bay compartment (10), further comprising:
a bleed air supply (60) connected to the conveying device (50) being a turbofan, and
a bleed air control valve (55) configured to provide a controllable amount of bleed air from the bleed air supply (60) to the turbofan.

7. The unpressurised bay compartment (10) of one of claims 1 to 6, wherein the unpressurised bay compartment (10) is a pack bay configured to house at least one air-conditioning system (90) of the aircraft (1).

8. An aircraft (1), comprising:
at least one unpressurised bay compartment (10) of one of claims 1 to 7.
